Europäisches Patentamt

European Patent Office

Office européen des brevets

(19)

(11) Numéro de publication : **0 029 764**
**B1**

(12) **FASCICULE DE BREVET EUROPÉEN**

(45) Date de publication du fascicule du brevet :
05.10.83

(51) Int. Cl.³ : **B 23 B 27/14**

(21) Numéro de dépôt : **80401562.6**

(22) Date de dépôt : **03.11.80**

(54) **Plaquette de coupe adaptée à l'usinage des matériaux réfractaires.**

(30) Priorité : **15.11.79 FR 7928519**

(43) Date de publication de la demande :
**03.06.81 Bulletin 81/22**

(45) Mention de la délivrance du brevet :
**05.10.83 Bulletin 83/40**

(84) Etats contractants désignés :
**DE FR GB IT SE**

(56) Documents cités :
**DE C 896 896**
**FR A 1 214 024**
**FR A 2 158 983**
**GB A 1 182 938**
**US A 3 152 385**
**US A 3 229 349**
**US A 3 681 830**
**US A 3 934 319**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Boulanger, Jean-Jacques**
**10 Cour de Pythagore**
**F-91350 Grigny (FR)**
Inventeur : **Vigneau, Joel Olivier Abel**
**10 rue de la Justice**
**Beauvais F-91750 Champcueil (FR)**

(74) Mandataire : **Moinat, François et al**
**S.N.E.C.M.A. Service des Brevets Boîte Postale 81**
**F-91003 Evry Cedex (FR)**

Jouve, 18, rue St-Denis, 75001 Paris, France

## Plaquette de coupe adaptée à l'usinage des matériaux réfractaires

La présente invention concerne un outil de coupe du type amovible en forme de plaquette polygonale comportant une surface supérieure, à contour polygonal arrondi aux angles et reliée par une surface latérale à une surface inférieure, destinée à être montée ou rapportée sur un porte-outil pour l'usinage de pièces, en particulier de pièces en alliage résistant à des températures élevées.

Les alliages dits « réfractaires », de la famille des alliages austénitiques à base de nickel ou de cobalt trouvent un emploi croissant dans la réalisation des pièces de turboréacteurs. Ce type de matériaux offre des difficultés d'usinage liées à leur conductivité thermique relativement faible et à leur structure cristalline du type cubique à face centrée.

Ces difficultés ont conduit à rechercher les outils de coupe les mieux adaptés à de bonnes performances d'usinage et surtout à rechercher l'augmentation de la durée de vie des outils. C'est ainsi que le brevet US-A-3 229 349 a déjà proposé une plaquette de coupe comportant une surface supérieure à contour polygonal arrondi aux angles et reliée par une surface latérale à une surface inférieure, des arêtes de coupe constituées par des tranchants principalement rectilignes, formés à angle vif entre la surface supérieure et la surface latérale et des chanfreins situés aux angles du contour polygonal et intersectant la surface supérieure et la surface latérale sur au moins une partie de la longueur des segments curvilignes du contour polygonal arrondi.

On a constaté, en particulier pour l'usinage des alliages austénitiques, qu'avec une telle plaquette de coupe, une usure en entaille se développait par détérioration locale de l'arête au niveau de la profondeur de passe au bout d'un temps moyen de 2 mn. Ces entailles atteignent alors une dimension qui peut conduire à un éclatement de la plaquette. La présente invention a pour but de remédier à cet inconvénient et concerne une plaquette de coupe du genre ci-dessus remarquable en ce que la ligne d'intersection produite par l'intersection desdits chanfreins avec la surface latérale présente un tranchant curviligne à angle vif entre le chanfrein et la surface latérale raccordant les deux tranchants rectilignes au voisinage desdits angles du contour polygonal.

Cette géométrie particulière a permis de retarder le temps d'apparition de l'usure en entaille et de porter à 10 mn la durée de vie des plaquettes de coupe.

Selon une particularité de l'invention, la largeur du chanfrein présentée par le rayon de l'outil est comprise entre 0,1 et 0,3 mm. Selon une autre particularité de l'invention, l'angle d'inclinaison de la surface du chanfrein sur la surface supérieure est compris entre 15° et 30°.

D'autres caractéristiques apparaîtront à la lecture de la description qui va suivre accompagnée des dessins annexés, donnés à titre d'exemple, dans lesquels :

la figure 1 illustre le montage d'une plaquette de coupe sur un porte-outil pendant une opération d'usinage ;

la figure 2 est une vue en perspective d'une plaquette du commerce ;

la figure 2a est une vue analogue montrant le développement d'une usure en entaille ;

la figure 3 est une vue en perspective d'une plaquette de coupe améliorée partiellement ;

la figure 3a est une vue de la même plaquette montrant les développements relatifs d'une usure en entaille par détérioration locale de l'arête et d'une usure au rayon de l'outil

la figure 4 est une vue en perspective d'une plaquette selon l'invention ;

la figure 4a est une vue de la même plaquette montrant l'extension de l'usure en entaille au bout d'un temps prolongé.

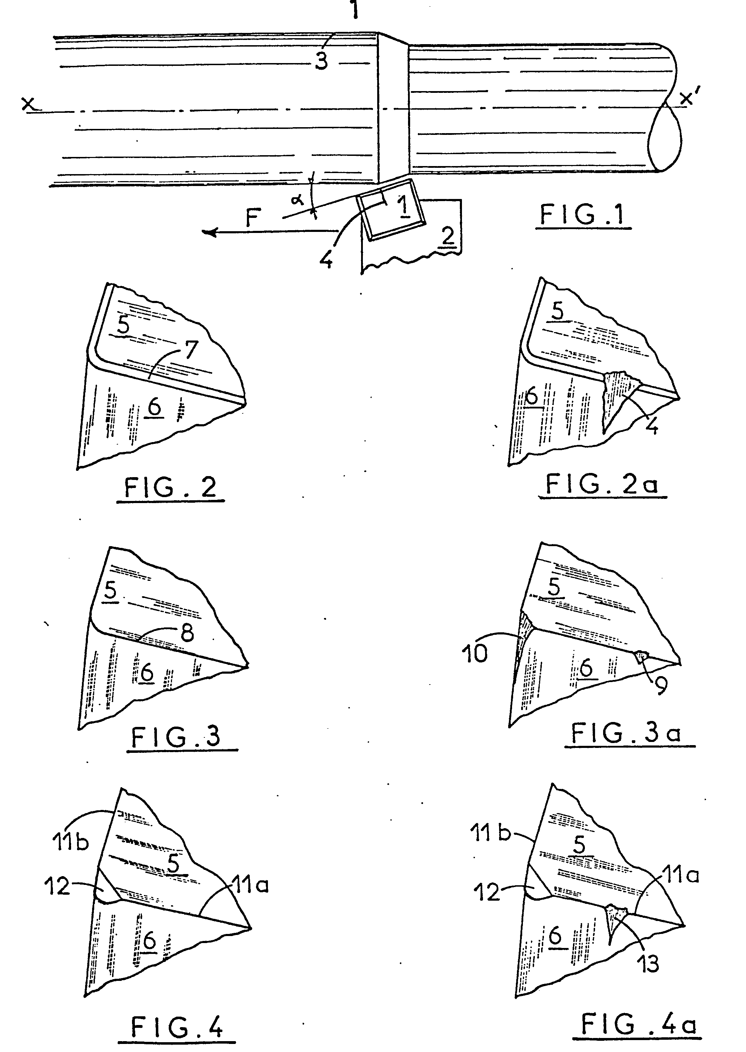

On a représenté sur la figure 1 une plaquette de coupe 1 montée sur un porte-outil 2, pour l'usinage d'une pièce cylindrique 3 tournant autour de son axe longitudinal X'X. L'avance de l'outil s'effectue dans la direction de la flèche F. L'angle $\alpha$ qui est l'angle d'attaque de la plaquette est un paramètre à considérer en ce qui concerne la nature de la première détérioration apparaissant sur l'outil de coupe.

Pour des angles d'attaque $\alpha$ compris entre 90 et 60° on a constaté la prédominance d'une usure en entaille 4 se développant localement au niveau de la profondeur de passe qui marque la frontière entre la zone de portée de l'outil de coupe et la pièce, à l'endroit où se produit l'interruption de l'enlèvement de matière. Ce phénomène est général et le mécanisme en est encore mal connu.

On a représenté sur la figure 2 un outil de coupe classique, en vue partielle perspective, montrant une surface supérieure 5 et une surface latérale 6. A l'intersection de ces deux surfaces et tout le long du contour de la surface supérieure 5, l'arête de coupe présente un chanfrein 7 visant à empêcher l'ébrèchement de l'outil.

La figure 2a en regard de la figure 2 montre une vue agrandie de l'entaille 4, qui apparaît à l'emplacement indiqué sur la vue d'ensemble de la figure 1. L'expérience montre que l'extension de cette entaille est telle qu'au bout d'un temps moyen de 2 mm la plaquette de coupe ne peut plus être utilisée.

La figure 3 illustre une configuration réalisée au cours d'une première étape des essais avec une plaquette constituée du même matériau que la plaquette de la figure 2 : par exemple un cermet à base d'alumine. Sur cette plaquette l'arête de coupe 8 est formée à angle vif entre la surface supérieure 5 et la surface latérale 6, sur tout le contour de la surface supérieure de la plaquette.

Sur la figure 3a en regard on a représenté les phénomènes d'usure tels qu'ils apparaissent après 4 mn d'utilisation, dans des conditions d'emploi analogues à celles de la figure 2a. On constate sur cette figure que l'usure en entaille 9, apparaissant au niveau 4 de la profondeur de passe, est alors beaucoup moins développée. En revanche, un autre phénomène de destruction vient se superposer au précédent. Il s'agit d'un effondrement, figuré en 10, dans la zone du dièdre défini par la pointe de coupe dite rayon de l'outil. On peut supposer qu'une protection partielle de l'arête a été obtenue et que cette protection, en retardant l'apparition du phénomène d'entaille, a donné la possibilité d'observer un phénomène d'usure particulier, que l'emploi des plaquettes du type classique ne permettait pas de détecter.

La figure 4 montre, en vue perspective partielle, une plaquette de coupe selon l'invention. On voit sur cette figure que la plaquette comporte des arêtes rectilignes 11a, 11b, formées à angle vif entre la surface supérieure 5 et la surface latérale 6. D'autre part, à l'emplacement du segment curviligne de raccordement du contour polygonal de la surface supérieure 5, un chanfrein 12 intersecte les surfaces 5 et 6. Ce chanfrein détermine avec la surface latérale un tranchant à angle vif de tracé curviligne qui raccorde les tranchants rectilignes 11a et 11b. Ce chanfrein a été représenté schématiquement de manière volontairement agrandie. Son angle d'inclinaison par rapport à la surface 5 est d'environ 20° et la largeur de la place d'arête est de l'ordre de 0,2 mm.

Les essais ont permis d'établir qu'une plaquette comportant la combinaison de ces deux caractéristiques, à savoir des tranchants rectilignes de type 11a, 11b à angle vif entre la surface supérieure 5 et la surface latérale 6 d'une part et des chanfreins 12 raccordant ces tranchants et intersectant la surface supérieure et la surface latérale dans la zone du rayon de l'outil d'autre part, offrait une durée de service considérablement plus longue que celle des plaquettes décrites aux figures 2 et 3.

La figure 4a en regard illustre l'extension d'une entaille 13, telle qu'elle se présente au terme d'une durée de service de 10 mn. On constate que l'extension de l'entaille 13 est alors intermédiaire entre celle de l'entaille 4 de la figure 2a et celle de l'entaille 9 de la figure 3a. Le phénomène d'effondrement du rayon de l'outil est évité.

Une tentative d'explication pourrait se fonder sur le fait que dans la nouvelle configuration décrite, les copeaux adhérents, cause principale de la détérioration des outils, parviennent en quantité plus faible au niveau de la profondeur de passe indiqué en 4 à l'endroit où se produit un passage brusque d'une zone à température élevée à une zone à température beaucoup plus basse.

En outre, une protection efficace est réalisée au niveau de la zone du rayon de l'outil par le chanfrein de raccordement 12.

Cet effet de combinaison s'est révélé d'une application suffisamment générale pour être étendu aux outils de nature céramique, et également aux outils réalisés en carbures métalliques.

D'autre part, le procédé permettant d'obtenir cette géométrie particulière n'a pas d'influence directe sur l'effet de combinaison obtenu.

C'est ainsi que les tranchants rectilignes et le chanfrein au rayon peuvent être obtenus par rectification ou affutage à la meule. Il est possible également de les réaliser par moulage et pressage à chaud de la plaquette, obtenue directement de frittage.

Enfin, il faut remarquer que l'amélioration ayant pour effet de retarder l'apparition de l'entaille est obtenue dans toute la gamme des angles de direction d'arête de l'outil.

Bien entendu, la description de l'exemple donné à la figure 4 n'est pas limitative. C'est ainsi que le contour de la face supérieure de la plaquette peut présenter une forme polygonale quelconque. L'invention couvre également une plaquette dont le contour de la face supérieure est en forme de polygone à arêtes curvilignes, l'expression rectiligne qui a été utilisée pour le tracé du tranchant des arêtes devant être dans ce cas comprise comme à grand rayon de courbure, par opposition aux segments curvilignes du contour, qui sont à faible rayon de courbure. L'invention concerne aussi bien les plaquettes à surface latérale droite que les plaquettes à surface latérale formant un angle de dépouille.

## Revendications

1. Plaquette de coupe comportant une surface supérieure (5), à contour polygonal arrondi aux angles et reliée par une surface latérale (6) à une surface inférieure, des arêtes de coupe constituées par des tranchants principalement rectilignes (11a, 11b), formés à angle vif entre la surface supérieure (5) et la surface latérale (6) ainsi que des chanfreins (12) situés aux angles du contour polygonal et intersectant la surface supérieure (5) et la surface latérale (6) sur au moins une partie de la longueur des segments curvilignes du contour polygonal arrondi, caractérisée en ce que la ligne d'intersection produite par l'intersection desdits chanfreins (12) avec la surface latérale (6) présente un tranchant curviligne à angle vif entre le chanfrein et la surface latérale raccordant les deux tranchants rectilignes (11a, 11b) au voisinage desdits angles du contour polygonal.

2. Plaquette de coupe selon la revendication 1, caractérisée en ce que la largeur du chanfrein (12) est comprise entre 0,1 et 0,3 mm.

3. Plaquette de coupe selon la revendication 2, caractérisée en ce que l'angle d'inclinaison de la surface du chanfrein (12) sur la surface supérieure est compris entre 15° et 30°.

4. Plaquette de coupe selon l'une des revendications 1 à 3, caractérisée en ce qu'elle est constituée d'un matériau céramique.

5. Plaquette de coupe selon l'une des revendications 1 à 3, caractérisée en ce qu'elle est constituée d'un matériau cermet.

6. Plaquette de coupe selon l'une des revendications 1 à 3, caractérisée en ce qu'elle est constituée d'un carbure métallique.

7. Plaquette de coupe selon l'une des revendications 1 à 6, caractérisée en ce que les tranchants et les chanfreins sont obtenus par rectification à la meule.

8. Plaquette de coupe selon l'une des revendications 1 à 6, caractérisée en ce que les tranchants et les chanfreins sont obtenus directement de frittage.

## Claims

1. Cutting bit comprising an upper surface (5), with a polygonal outline radiussed at the corners and connected by a lateral surface (6) to a lower surface, cutting edges defined by mainly rectilinear edges (11a, 11b) formed at an acute angle between the upper surface (5) and the lateral surface (6) together with chamfers (12) disposed at the corners of the polygonal outline and intersecting the upper surface (5) and the lateral surface (6) over at least a part of the length of the curvilinear segments of the radiussed polygonal outline, characterised in this that the line of intersection produced by the intersection of the said chamfers (12) with the lateral surface (6) defines a curvilinear edge with an acute angle between the chamfer and the lateral surface connecting the two rectilinear edges (11a, 11b) in the vicinity of the said corners of the polygonal outline.

2. Cutting bit according to claim 1, characterised in this that the width of the chamfer (12) lies between 0.1 and 0.3 mm.

3. Cutting bit according to claim 2, characterised in this that the angle of inclination of the chamfer surface (12) in relation to the upper surface lies between 15° and 30°.

4. Cutting bit according to one of claims 1 to 3, characterised in this that it is made of a ceramic material.

5. Cutting bit according to one of claims 1 to 3, characterised in this that it is made of a cermet material.

6. Cutting bit according to one of claims 1 to 3, characterised in this that it is made of a metallic carbide.

7. Cutting bit according to one of claims 1 to 6, characterised in this that the edges and the chamfers are produced by truing on a milling cutter.

8. Cutting bit according to one of claims 1 to 6, characterised in this that the edges and the chamfers are produced directly by sintering.

## Ansprüche

1. Schneidplättchen mit einer Oberseite (5), die einen an den Ecken abgerundeten Polygonalumriß aufweist und durch eine Seitenfläche (6) mit einer Unterseite verbunden ist, mit Schneidkanten, die aus im wesentlichen geradlinigen Schneiden (11a, 11b) entstanden sind, die scharfkantig aus Oberseite (5) und Seitenfläche (6) gebildet sind, sowie mit Abfasungen (12) an den Ecken des Polygonalumrisses, wodurch mindestens ein Teil der Länge der krummlinigen Abschnitte des Polygonalumrisses an der Oberseite (5) und der Seitenfläche (6) geschnitten wird, dadurch gekennzeichnet, daß die durch den Schnitt der genannten Abfasungen (12) mit der Seitenfläche (6) entstandene Schnittlinie eine zwischen der Abfasung und der Seitenfläche verlaufende scharfkantige krummlinige Schneide darstellt, die die beiden, den genannten Ecken mit Polygonalumriß benachbarten geradlinigen Schneiden (11a, 11b) verbindet.

2. Schneidplättchen nach Anspruch 1, dadurch gekennzeichnet, daß die Abfasung (12) zwischen 0,1 und 0,3 mm breit ist.

3. Schneidplättchen nach Anspruch 2, dadurch gekennzeichnet, daß der Neigungswinkel der Abfasungsfläche (12) gegenüber der Oberseite zwischen 15° und 30° liegt.

4. Schneidplättchen nach einem der Ansprüche 1 bis 3, dadurch gekennzeichnet, daß es aus einem Keramikmaterial besteht.

5. Schneidplättchen nach einem der Ansprüche 1 bis 3, dadurch gekennzeichnet, daß es aus einem Metallkeramikmaterial besteht.

6. Schneidplättchen nach einem der Ansprüche 1 bis 3, dadurch gekennzeichnet, daß es aus einem Karbid besteht.

7. Schneidplättchen nach einem der Ansprüche 1 bis 6, dadurch gekennzeichnet, daß die Schneiden und die Abfasungen durch Schleifen auf dem Schleifstein hergestellt sind.

8. Schneidplättchen nach einem der Ansprüche 1 bis 6, dadurch gekennzeichnet, daß die Schneiden und die Abfasungen unmittelbar durch Sintern hergestellt sind.

0 029 764

FIG.1

FIG.2

FIG.2a

FIG.3

FIG.3a

FIG.4

FIG.4a